Europäisches Patentamt

European Patent Office

Office européen des brevets

(19)

(11) Numéro de publication : **0 033 945**
**B1**

(12) # FASCICULE DE BREVET EUROPÉEN

(45) Date de publication du fascicule du brevet :
23.05.84

(21) Numéro de dépôt : **81100778.0**

(22) Date de dépôt : **04.02.81**

(51) Int. Cl.³ : **G 01 M   3/20**

(54) Détecteur de fuites à hélium.

(30) Priorité : **11.02.80 FR 8002923**

(43) Date de publication de la demande :
**19.08.81 Bulletin 81/33**

(45) Mention de la délivrance du brevet :
**23.05.84 Bulletin 84/21**

(84) Etats contractants désignés :
**AT BE CH DE FR GB IT LI LU NL SE**

(56) Documents cités :
**FR-A- 1 474 137**
**US-A- 3 968 675**
**Le dossier contient des informations techniques présentées postérieurement au dépôt de la demande et ne figurant pas dans le présent fascicule.**

(73) Titulaire : **COMPAGNIE INDUSTRIELLE DES TELE-COMMUNICATIONS CIT-ALCATEL S.A. dite :**
**12, rue de la Baume**
**F-75008 Paris (FR)**

(72) Inventeur : **Tallon, Jacques**
**1, Place Saint François**
**F-74000 Annecy (FR)**

(74) Mandataire : **Weinmiller, Jürgen et al**
**Zeppelinstrasse 63**
**D-8000 München 80 (DE)**

EP 0 033 945 B1

Jouve, 18, rue St-Denis, 75001 Paris, France

## Description

L'invention est relative à un détecteur de fuites à hélium comprenant une pompe à diffusion moléculaire comportant une entrée et une sortie, et une cellule spectrométrique de mesure disposée en dérivation sur ladite pompe, ladite sortie étant reliée, par une conduite de sortie, à une bride d'entrée de raccordement à une installation à tester.

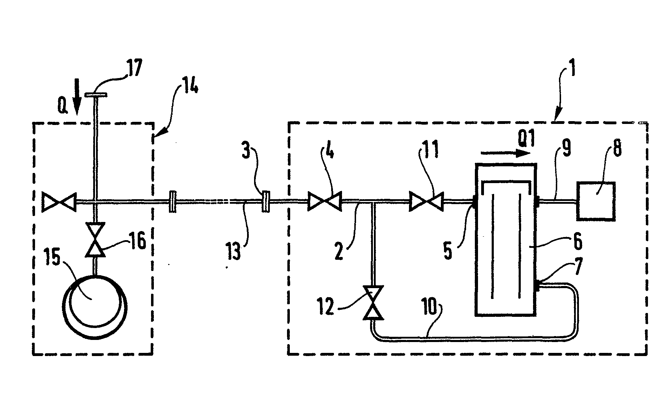

On connaît, par le document US-A-3 968 675, un détecteur de fuites à hélium, dans lequel le gaz traceur traverse soit en contrecourant la pompe à hélium (fig. 1), soit un piège froid, avant d'être analysé dans la cellule (fig. 3). Une pompe primaire sert avant la mesure au dégazage du système et pendant la mesure au maintien d'une pression déterminée à la sortie de refoulement de la pompe à diffusion. On a constaté qu'un détecteur du type contrecourant livre un signal de détection qui est peu stable, dû au fonctionnement de la pompe à diffusion en régime de sous-chauffe. Or, sans un tel régime, l'hélium ne passerait pas par la pompe à diffusion en contrecourant. Si, par contre, on détecte les atomes d'hélium avant leur aspiration par la pompe à diffusion, comme il est le cas dans le détecteur selon la fig. 3 de ce document, l'accès à l'enceinte à surveiller et la sortie de refoulement de la pompe à diffusion ne communiquent plus directement. Il est donc impossible de profiter d'une pompe à palettes qui existe éventuellement en liaison avec ladite enceinte. Le détecteur doit obligatoirement disposer de sa propre pompe primaire.

L'invention a pour but de proposer un détecteur qui n'a pas besoin d'une pompe propre à palettes lorsqu'il en existe déjà une en liaison avec l'enceinte à surveiller.

Ce but est atteint selon l'invention par un détecteur comme spécifié ci-dessus, qui est caractérisé par le fait que pour éviter l'utilisation d'une pompe à palettes dans le détecteur l'entrée de la pompe à diffusion est reliée à un point de la conduite de sortie par l'intermédiaire d'un étranglement.

Le détecteur peut avantageusement comporter une vanne d'isolement à l'entrée, une vanne de prélèvement sur l'entrée de la pompe à diffusion et une vanne de mesure sur la canalisation de court-circuit.

Le détecteur peut comporter, en outre, un piège entre la pompe à diffusion et la cellule spectrométrique.

Un autre piège peut être interposé entre la vanne de prélèvement et l'entrée de la pompe à diffusion.

La figure unique est une représentation schématique d'un détecteur de fuites à hélium selon l'invention.

Un ensemble 1 d'un détecteur de fuites comporte une canalisation d'entrée 2, une bride d'entrée 3 et une vanne d'isolement 4.

La canalisation d'entrée 2 débouche sur l'entrée 5 d'une pompe à diffusion par l'intermédiaire d'un diaphragme ou étranglement qui peut être constitué par une vanne de prélèvement 11 réglable. Une cellule spectrométrique de mesure 8 est reliée à la pompe à diffusion 6 par l'intermédiaire d'une canalisation 9.

D'autre part, la sortie 7 de la pompe à diffusion 6 est reliée par une canalisation 10 et une vanne de mesure 12 en un point de raccordement sur la canalisation 2 entre les vannes 4 et 11.

La bride d'entrée 3 du détecteur 1 est, lors de son utilisation, raccordée par une canalisation 13 à un groupe de pompage auxiliaire 14 comprenant une pompe à palettes 15 avec une vanne d'isolement 16 et une bride de raccordement 17 à une installation à tester non représentée.

Le fonctionnement est le suivant. Dans ce montage un flux d'hélium Q provenant de l'installation pourra donner un flux d'hélium $Q1 = nQ$ dans le circuit bouclé du spectromètre avec $n = 1$. Le rapport $n$ est lié aux vitesses de pompage à l'entrée du spectromètre 8 et à l'entrée de la pompe auxiliaire de ce groupe. On est donc en présence d'un montage amplificateur de flux.

Dans un montage classique où la canalisation 7 de sortie de la pompe à diffusion 6 serait reliée à une pompe auxiliaire à palettes, le flux d'hélium Q entrant dans l'installation aurait donné, dans le circuit du spectromètre, un flux plus petit $q = Q/n$ avec $n = 1$, $n$ étant également une fonction des vitesses de pompage à l'entrée du spectromètre et à l'entrée de la pompe auxiliaire.

Avec ce montage on peut effectuer un prélèvement de gaz dans le circuit d'entrée, et en fermant la vanne d'entrée 4, conserver le flux Q1 pendant un certain temps pour en effectuer la mesure. En effet, le flux Q1 circule en gardant une valeur constante dans la boucle fermée du circuit de la pompe à diffusion 6. Il est possible d'obtenir la lecture du flux Q pénétrant dans l'installation, en fermant la vanne 12 sur la canalisation 10. On réalise alors la mesure en fermant successivement, après établissement du flux Q1, les vannes 12 puis la vanne d'isolement de la pompe auxiliaire 15. Le flux Q s'établit ainsi depuis l'entrée 3 jusqu'à la sortie 7 de la pompe à diffusion 6 obturée par la vanne 12. L'hélium s'accumule dans le volume situé entre la sortie 7 et la vanne 12, ce qui est sans inconvénient, car la pompe à diffusion empêche la rétrodiffusion d'hélium vers la cellule spectrométrique 8.

Un autre avantage de ce montage est de permettre de réaliser un détecteur sans pompe à palettes, et ne comportant pas de bride de raccordement supplémentaire pour cette pompe à palettes.

En variante, s'il est nécessaire de protéger la cellule spectrométrique 8, il est possible d'intercaler entre la pompe à diffusion 6 et la cellule 8 un piège quelconque qui peut être, par exemple, du type à azote liquide, ionique, ou encore zéolithes.

D'autre part, pour améliorer le pompage, il est aussi possible de placer un piège entre la vanne de prélèvement 11 et l'entrée 5 de la pompe à diffusion 6.

## Revendications

1. Détecteur de fuites à hélium comportant une pompe à diffusion moléculaire (6) comportant une entrée (5) et une sortie (7), et une cellule spectrométrique de mesure (8) disposée en dérivation sur ladite pompe, ladite sortie (7) étant reliée, par une conduite de sortie (10) à une bride d'entrée (3) de raccordement à une installation à tester, caractérisé en ce que pour éviter l'utilisation d'une pompe à palettes dans le détecteur l'entrée (5) de la pompe à diffusion est reliée à un point de la conduite de sortie (10) par l'intermédiaire d'un étranglement (11).

2. Détecteur selon la revendication 1, caractérisé en ce que l'étranglement est constitué par une vanne (1) réglable.

3. Détecteur selon la revendication 1, caractérisé en ce qu'il comporte une vanne d'isolement (4) placée sur la canalisation d'entrée (2).

4. Détecteur selon l'une des revendications 1 à 3, caractérisé en ce qu'il comporte une vanne de mesure (12) sur la conduite de sortie (10).

5. Détecteur selon l'une des revendications 1 à 4, caractérisé en ce qu'un piège est interposé entre la pompe à diffusion (6) et la cellule spectrométrique (8).

6. Détecteur selon l'une des revendications 1 à 5, caractérisé en ce qu'un piège est interposé entre la vanne réglable (11) et l'entrée (5) de la pompe à diffusion.

## Claims

1. A helium leakage detector comprising a molecular diffusion pump (6) having an inlet (5) and an outlet (7), and comprising a spectrometric measuring cell (8) which is disposed in derivation on said pump, said outlet (7) being connected, by an outlet duct (10), to an inlet flange (3) which is branched to an installation under test, characterized in that, in order to avoid the utilization of a backing pump in the detector, the inlet (5) of the diffusion pump is connected to a point of the outlet duct (10) via a constriction (11).

2. A detector according to claim 1, characterized in that the constriction is constituted by an adjustable valve (11).

3. A detector according to claim 1, characterized in that it comprises an isolating valve (4) located in the inlet pipe (2).

4. A detector according to one of the claims 1 to 3, characterized in that it comprises a measuring valve (12) in the outlet duct (10).

5. A detector according to one of the claims 1 to 4, characterized in that a trap is interposed between the diffusion pump (6) and the spectrometric cell (8).

6. A detector according to one of the claims 1 to 5, characterized in that a trap is interposed between the adjustable valve (11) and the inlet (5) of the diffusion pump.

## Ansprüche

1. Helium-Lecksucher, der eine Molekulardiffusionspumpe (6) mit einem Eingang (5) und einem Ausgang (7) und eine spektrometrische Meßzelle (8) aufweist, die in Ableitung an der Pumpe angeordnet ist, wobei der Ausgang (7) über eine Ausgangsleitung (10) mit einem Flansch (3) zum Anschluß an eine zu testende Anlage verbunden ist, dadurch gekennzeichnet, daß, um die Verwendung einer Vorvakuumpumpe im Lecksucher zu vermeiden, der Eingang (5) der Diffusionspumpe mit einem Punkt der Ausgangsleitung (10) über eine Drosselstelle (11) verbunden ist.

2. Lecksucher nach Anspruch 1, dadurch gekennzeichnet, daß die Drosselstelle aus einem Regelventil (11) besteht.

3. Lecksucher nach Anspruch 1, dadurch gekennzeichnet, daß er ein Isolierventil (4) aufweist, das in der Eingangskanalisation (2) angeordnet ist.

4. Lecksucher nach einem der Ansprüche 1 bis 3, dadurch gekennzeichnet, daß er ein Meßventil (12) in der Ausgangsleitung (10) aufweist.

5. Lecksucher nach einem der Ansprüche 1 bis 4, dadurch gekennzeichnet, daß eine Fall zwischen die Diffusionspumpe (6) und die spektrometrische Zelle (8) eingefügt ist.

6. Lecksucher nach einem der Ansprüche 1 bis 5, dadurch gekennzeichnet, daß eine Falle zwischen dem Regelventil (11) und dem Eingang (5) der Diffusionspumpe angeordnet ist.